# EUROPEAN PATENT APPLICATION

(11) **EP 3 328 044 A1**
(43) Date of publication of application: **30.05.2018**
(21) Application number: 16382551.6
(22) Date of filing: 23.11.2016
(51) Int. Cl.: H04M 3/42

(54) **METHOD FOR PROVIDING AN EARLY FEEDBACK ABOUT THE ESTABLISHMENT OF A TELECOMMUNICATION SERVICE CALL**

(71) Applicant: Telefonica Digital España, S.L.U., 28013 Madrid (ES)
(72) Inventor: LANTZ, Johan, 28013 MADRID (ES)
(74) Representative: Herrero & Asociados, S.L.

(57) **Abstract**

Present invention refers to a method for providing an early feedback about the establishment of a telecommunication service call between a caller and a callee, through a telecommunication network. The method comprises: receiving a telecommunication network information comprising at least one parameter associated to reachability of the callee; determining a probability of the callee to be reachable based on the at least one parameter; and if the probability is higher than the threshold, providing the caller with an early ringing notification else providing the default ringing notification.

## Description

### TECHNICAL FIELD OF THE INVENTION

Present invention generally relates to telecommunication networks and more specifically to a method for providing an early feedback about the establishment of a telecommunication service call, so that a ringing tone can be presented almost instantly to a caller of a normal call.

### BACKGROUND OF THE INVENTION

Nowadays, when a call is initiated in a standard telecommunication network, the system relies entirely on feedback from the callee telecommunication network and/or device before the caller is presented with either a ring back or busy tone. A traditional circuit switched call easily takes 5-10 seconds only to start producing the ring back tone to the caller.

According to state of art, telecommunication networks connect calls as follows: when a first user (Alice) places a call to a second user (Bob) using a traditional packet switched telephone network (PSTN) line, a Cellular Switched mobile phone or even Voice over LTE (VoLTE), Alice will first get connected to her provider's network that need to locate Bob who might be residing in the network of another mobile operator and even in a difference country. If this is the case Alice's carrier will need to ask Bob's carrier to locate him. When Bob's carrier manages to do this, Bob's phone will be paged and if its phone is reachable it confirms back to the network that it is ringing and this information is propagated back to Alice's network and in turn to Alice's device as a standard ring-back tone. This procedure may naturally take quite some time since there are so many elements involved. Not only might it be hard to reach Bob's device for various reasons such as poor coverage or his device being in a low power state that takes longer to wake up (especially in the case of Bob being reachable on his regular number but through a VoIP application) but on top of that the service level between two mobile operators might not be easy to guarantee.

In contrast, over-the-top (OTT) Apps connect calls in a completely different way, since the OTT player controls all the devices using the service. There are no dependencies or interconnections to other networks. Thus, OTT providers mostly make an instant synchronous verification if Bob's device is currently marked as connected to the service (for instance he has refreshed his registration to a central server in the last *n* seconds and currently is not engaged in a call. If these availability checks are ok, the OTT system will send an instant notification back to Alice that Bob's phone is ringing, even if this cannot be guaranteed. The ring-back actually only means that the system has started to try and get in touch with Bob but he may very well be unreachable. In fact the OTT system does not usually have information as to whether Bob is engaged in a native phone call, but just whether he is engaged in a call within the OTT system.

One of the main problems for the solutions requiring interoperability between different domains/providers (PSTN, CS, VoLTE, WiFi calling, etc.) compared to the OTT apps is that the inherited delay in the existing solutions can easily inflict 5-10 seconds of silence when trying to establish a call. This time is so long that the caller might even hang the call prematurely only due to the lack of feedback from the telecommunication network.

On the other hand when the caller places a call to one of his Whatsapp contacts or starts a Skype-Skype session with another user, the caller receives an instant ring back notification creating the perception that these OTT apps are much faster and more responsive then the normal phone line.

Moreover, for hybrid applications that are delivered as an App but performs the same functionality as the traditional circuit switched call, however through VoIP, the challenge is even greater since the user will see this App as something that performs much slower than the OTT alternatives.

Therefore, given that pure OTT clients like Whatsapp, Viber or Skype offer a better user experience where the user receives feedback almost instantly, users will get increasingly accustomed to a super fast response from the OTT players and the perception for normal calls will be poor.

For all the reasons mentioned before, it is vital for technological advance of traditional telephony to find a reasonable way to reduce or even eliminate this delay, both for traditional CS calls and also for hybrid calls connecting normal PSTN numbers using a VoIP application.

### SUMMARY OF THE INVENTION

Present invention solves the aforementioned problems by leveraging certain ways of the network to predict if a callee will be reachable. Thus, a first aspect of present invention refers to a method for providing an early feedback to a caller about the establishment of a telecommunication service call between the caller and a callee, through a telecommunication network, comprising the steps of:
a) receiving a telecommunication network information comprising at least one parameter associated to reachability of the callee;
b) determining a probability of the callee to be reachable based on the at least one parameter;
c) if the probability is higher than the threshold, providing the caller with an early ringing notification; where the early ringing notification is provided before receiving an eventually notification confirming that the callee has been actually reached;
d) otherwise providing the caller with a standard ringing notification upon receiving a notification confirming that a callee's mobile device has been reached.

In one embodiment of the invention, the at least one parameter indicates whether the callee is registered to the telecommunication network and whether the callee is currently involved in a call.

In one embodiment of the invention, the at least one parameter indicates whether the callee has performed any activity on his mobile device in a previously set period of time. In particular, present invention considers that the activity may comprise a circuit switch call, an SMS message and/or active data usage initiated by the callee.

In one embodiment of the invention, the at least one parameter combines an historic of successful telecommunication network activities of the callee with corresponding locations, dates and times.

In one embodiment of the invention, the at least one parameter indicates a quality of the connection between the caller and the callee. One particular embodiment of present invention further consider actively obtaining the quality of the connection by performing periodical quality tests of connections available on the mobile device of the calle.

Optionally, according to one embodiment of present invention, determining a probability of the callee to be reachable may further comprise checking a list of numbers with a previously assigned 100% probability of the callee to be reachable.

Additionally, present invention may further comprise receiving at least one parameter associated to callee's usage pattern based on callee's call detail records stored by callee's mobile operator and wherein determining a probability of the callee to be reachable is also based on said parameter associated to callee's usage pattern.

According to one particular embodiment of present invention, wherein two or more parameters are received, it may further comprise: assigning to each of the received parameters a type of parameter from a previously set list; assigning a level of relevance to each of the received parameters according to the type assigned on the previous step; and wherein, the step of determining a probability of the callee to be reachable further comprises weighting said two or more parameters according to the level of relevance assigned.

In one embodiment of present invention, the telecommunication network is a Next Generation Intelligent Network.

In one embodiment of present invention the caller and the callee reside in two different telecommunication networks.

In one embodiment of present invention the telecommunication service call comprises a circuit switched call or a packet switched telephony service of the telecommunication network.

A second aspect of the invention refers to a network element for providing an early feedback about the establishment of a telecommunication service call between a caller and a callee, through a telecommunication network, configured for:
- receiving a telecommunication network information comprising at least one parameter associated to reachability of the callee;
- determining a probability of the callee to be reachable based on the at least one parameter;
- if the probability is higher than the threshold, providing the caller with a ringing notification.

A last aspect of the invention refers to a computer program product comprising computer program code adapted to perform the method of present invention when said program code is executed on a computer, a digital signal processor, a field-programmable gate array, an application-specific integrated circuit, a micro-processor, a micro-controller, or any other form of programmable hardware.

Therefore, technical features of present invention involve several advantages in view of prior art. Taking into account that OTT players are challenging the traditional Telecom operators and it is only natural that users of a service that takes up to 10 seconds to provide feedback to an action will feel inclined switching to a service that feels more responsive, present invention proposes a set of inputs that is used to close one of many gaps between the OTT clients and the traditional telephony. But present invention not only allows traditional circuit-switched telephony service to be as responsive as the OTT telephony services in terms of providing the ring-back tone, but they are more selective, presenting an early ring-back tone just in those cases where the probability of the call actually reaching the other end is high, and thus avoiding the misleading circumstances where the ring-back tone is played and then the call fails to reach the other end and then a call error is reported to the caller, what may be perceived by the caller as a rude action from the callee, thus having a negative social impact.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:

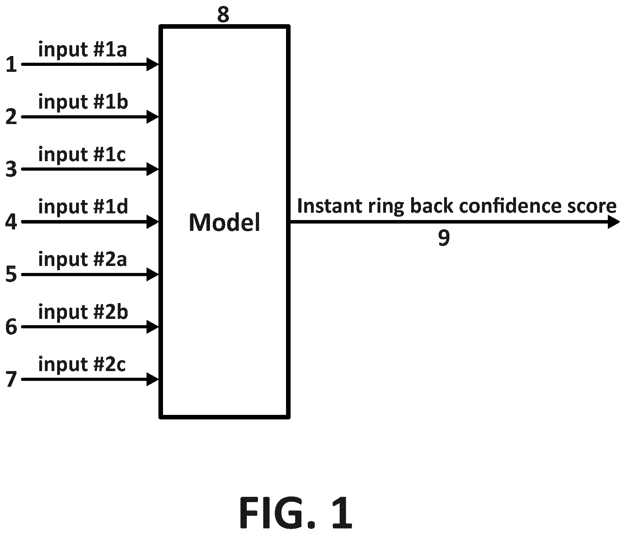

**Figure 1****.-** shows a model of present invention collecting various parameters to predict if an instant ring back tone can be safely sent to the caller.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

Present invention discloses a method for providing an early feedback about the establishment of a telecommunication service call between a caller and a callee.

Namely, present invention discloses a method which allows traditional circuit-switched telephony service to be as responsive as the OTT telephony services in terms of providing the ring-back tone, but present invention is more selective because it presents an early ring-back tone just in those cases where the probability of the call actually reaching the other end is high.

Present invention identifies ways for the network to predict if certain phone will be reachable and, according to one embodiment, it can be predicted as well the probability of him being busy. These parameters may be combined and weighted together to adjust each of them to a corresponding level of relevance, which result in a probability of the user being actually reached. Moreover, by setting a certain threshold and comparing the probability obtained of the user being actually reached, it can be provided the user with an early ringing notification.

In one embodiment of present invention, a trust score is used to combine all the parameters considered. Each parameter will contribute to increase the score, so that if the total score is sufficiently high (compared with the threshold previously set), the telecommunication network will provide an instant or almost instant ring back tone to the caller instead of waiting for the confirmation from the callee's mobile phone.

On the other hand, it is highly relevant to avoid as much as possible to provide a ring back tone in the cases where the callee will not be available or will be busy. The reason is that the caller will firstly receive a "ringing" tone, followed by a diversion to the voice mail or a call error tone, which can be perceived as the callee rejecting the call after having received the call notification. This would be considered to be rude in some cultures. Therefore it is key to reach a balance between providing early feedback to the caller whilst avoiding this early feedback to be misleading.

**Figure 1** shows one embodiment of present invention, where a set of different inputs (1-7) that can be used to close one of many gaps between the OTT clients and the traditional telephony, are collected by a model, which is implemented in a network element (8), to predict if an instant ring back tone can be safely sent to the caller by estimating a probability (9) of the callee of actually being reached.

Following, different parameters considered by present invention are presented. According to different embodiments, the parameters disclosed below may be used in isolation or combined with these or other parameters involving any information about reachability and real availability of the callee.

There is a first group of inputs related to shared network information. The initial assumption for this group of input parameters is that the caller (Alice) and the callee (Bob) reside in the same telecommunication network, which will simplify the explanations as it obviously gives the telecommunication network total control to provide Alice with the earlier ring back tone, but it should be noted that there is not any technical obstacles for using some of all of these parameters also if Alice and Bob reside in different networks.
(1) Input 1a: Bob's current device state in the telecommunication network:
   The telecommunication network, such as a Next Generation Intelligent Network (NGIN) is queried for parameters that will provide valuable information about the current situation for Bob in a close to instant way. These parameters can for instance be (but are not limited to):
      - If Bob's device is currently registered in the telecommunication network, such as a GSM network and not in a GSM call at that moment. This is a very strong indicator that Bob is at least not busy.
      - If Bob's device is currently registered in any packet switched telephony service of the network, such as VoLTE or WiFi Calling and not currently in a call. Like in the bullet above, this is a strong indicator that Bob is not occupied.
   The confidence value of these parameters is high. Consequently, any parameter sorted as "current device state" will be assigned with high level of relevance and it will imply a high score for the trust score.
(2) Input 1b: Bob's recent call or data activity in the telecommunication network:
   the telecommunication network, such as a NGIN, evaluates the most recent actions of Bob, for instance:
      - Recent CS call activities: if Bob has recently (e.g. <10min) engaged in a CS call that is now terminated the chances increase significantly that he is still reachable. This factor is naturally much stronger the closer we are to a previously successfully established call, but if combined for instance with location, that is Bob is in the same location as it was in the previously successfully established call, it can be enhanced to provide a strong indicator even after a reasonable amount time has elapsed (e.g. <30min).
      - Recent SMS activities: if Bob has redacted and sent an SMS very recently but is not engaged in a call right now. It is another strong indicator of his device being reachable
      - Recent data activity indicating active data usage and not background activity: most users perform actions that impact data consumption in a much more frequent way than SMS and CS calls. The problem is to determine which actions are user initiated and which actions are background activities from the applications installed on the device. By applying a model that can detect user activity in data transmission patters an increased confidence that the user is actively using the device can be acquired and thus the chances of Bob being reachable will increase.
      - Recent screen unlock actions: there is a high correlation between the number of times the callee has unlocked the device's screen in a last predefined set of time and the chances to be available to answer a call.
   The confidence value of these "recent activity" parameters is classified in one embodiment as medium relevance, so it will imply a medium score for the trust score.
(3) Input 1c: Bob's activity and location in the telecommunication network: the telecommunication network, such as a NGIN, evaluates any recent movements of Bob's device such as:
   - Call or data activities that have been recently performed by Bob with the device residing in the same cell tower as of the present moment: for instance, by monitoring the location of Bob as well as recent successful network activities, it can be greatly increase the confidence in that Bob is very likely to be reachable for inbound communications.
   - If statistics from Bob's location patterns indicates that he is in a location where he normally spends several hours and is responsive to calls: this is an extension of the basic location parameter where the system builds a model of the users behavior and with this information applying machine learning will be able with a high level of confidence to conclude that, when Bob for instance is at work or at home, there is a very high or very low chance of him being reachable. An example of the latter case is for instance if Bob works in a location, where mobile coverage is extremely poor or non-existing, he is normally not reachable during specific hours of certain days and it makes no sense to present an early ringing notification. On the other hand, another user with a normal desk job in the city may always be reachable during the same hours. The information from this location and time model will provide another input to the final model further providing us confidence if Bob's phone will be reachable or not.
   The confidence value of these "location" parameters is classified in one embodiment as medium relevance, so it will imply a medium score for the trust score.
(4) Input 1d: Bob's connection quality as seen by the telecommunication network or device: the quality as perceived by Bob's device can be reported to the telecommunication network in several ways such as:
   - Radio Resource Control (RRC) Measurement reports that in WCDMA and LTE networks gives an indication on the current signal quality for the radio connection as well the quality of neighboring cells. All mobile devices report their current connection quality to the network. This is done periodically or based on events configured by the mobile operator or network vendor. By acquiring and applying this information, present invention has an instant indication on the current connection quality as seen by Bob's mobile device. This information is a strong indicator about his current reachability and final availability for receiving a call.
   - Custom quality reports sent from the different layers of the signaling stack all the way up to the application layer where a phone application can report Arbitrary Strength Unit (ASU) and Received Signal Strength Indicator (RSSI) levels as well as performing its own periodical quality tests on any kind of packet connection (including WiFi) to inform the system about its current level of reachability. In contrast with the bullet above, which is generic, standardized and it is applicable to any mobile telecommunication network and any device, this second option suggests that an App installed on the device provides custom reports of the monitored values as seen by the application at this instant. The advantage of this is that an App can not only provide custom configurable measurement reports directly to the model, but it can also monitor WiFi quality, which provides a strong indicator about Bobs reachability for a call that can also be connected through hybrid services such as TuGo or Native WiFi Calling.
   The confidence value of these parameters is high. Consequently, each of the parameters sorted as "connection quality" will be assigned with high level of relevance and it will imply a high score for the trust score.
   Present invention may consider in one embodiment, a second group of inputs related to generic machine learnable inputs. This second group comprises those things that a network element could either learn by direct lookup or by collecting statistics over time.
(5) Input 2a: destination numbers that always answer. There are large amount of numbers that will never present a busy tone to the caller, basically any service with a queuing system involves a 100% probability of the caller being reach in a call. Some examples are:
   o Self-service numbers such as bank services where it can be performed an operation without human intervention on the other side.
   o Automatic schedule services for instance for buses
   o Switchboards such as for most Taxi companies
   o Companies with global presence such as airlines.
   o Most customer attention centers (even if they would happen to be closed at the time of calling, they will never be busy).
   For all of these destination numbers there is no need to wait for a confirmation of ringing by the local or remote network, unless the whole system is down there is a 100% probability that these numbers will answer. In these cases this method will allow the local network to provide an instant ring back tone to Alice offering her a much more responsive experience, an experience she has become accustomed to by using various OTT VoIP applications.
   The confidence value of these parameters is high. Consequently, each of the parameters sorted as "destination number with automatic response" will be assigned with high level of relevance and it will imply a high score for the trust score. According to one embodiment of the invention, a parameter of this type involves the maximum score for the trust score.
(6) Input 2b: Destination numbers that uses a voice mail service instead of error tone. Some mobile telecommunication networks will never send an error tone in the case of the customer not being reachable. Instead the caller will be redirected to a voice mail service by default. For this kind of destination numbers there is never any risk offending the caller with a busy or error tone after playing a ring back tone since the call will always end up in the voice mail. Thus, in addition to the numbers of input 2a), it can be created a fiction where these numbers with an active voice service mail service are assigned with a 100% probability of the caller being reach in a call.
   The confidence value of these parameters is high. Consequently, each of the parameters sorted as "destination number with automatic voice mail" will be assigned with high level of relevance and it will imply a high score for the trust score. According to one embodiment of the invention, a parameter of this type involves the maximum score for the trust score.
(7) Input 2c: Bobs usage patterns. Since the mobile operator has access to all of Bobs call detail records CDR (both incoming and outgoing) as well as the time of day the call was placed, connection success or not and the call duration, a model to estimate the likelihood of Bob being reachable is built.

The advantage with this type of model is that it is completely standalone and it is based on standard CDR's from the mobile operator. Already with this historical knowledge a strong indicator of Bobs reachability is instantly calculated and based on the result Alice may or may not be presented with an instant ring-back notification.

The confidence value of these parameters is high. Consequently, each of the parameters sorted as "user usage pattern" will be assigned with high level of relevance and it will imply a high score for the trust score.

## Claims

1. Method for providing an early feedback to a caller about the establishment of a telecommunication service call between the caller and a callee, through a telecommunication network, the method comprising the steps of:
a) receiving a telecommunication network information comprising at least one parameter associated to reachability of the callee;
b) determining a probability of the callee to be reachable based on the at least one parameter;
c) if the probability is higher than the threshold, providing the caller with an early ringing notification:
d) otherwise providing the caller with a standard ringing notification upon receiving a notification confirming that a callee's mobile device has been reached.

2. Method according to claim 1 wherein the at least one parameter indicates whether the callee is registered to the telecommunication network and whether the callee is currently involved in a call.

3. Method according to any one of previous claims wherein the at least one parameter indicates whether the callee has performed any activity on his mobile device in a previously set period of time.

4. Method according to any one of previous claims wherein the at least one parameter indicates whether the callee has performed any activity on his mobile device in a previously set period of time in the same location as its location when a call invitation is triggered.

5. Method according to any one of claims 3 or 4 wherein the activity comprises a circuit switch call, an SMS message, active data usage initiated by the callee and/or a certain number of screen unlocks.

6. Method according to any of previous claims wherein the at least one parameter combines an historic of successful telecommunication network activities of the callee with corresponding locations, dates and times.

7. Method according to any of previous claims wherein the at least one parameter indicates a quality of the connection between the caller and the callee.

8. Method according to claim 7 further comprising actively obtaining the quality of the connection by performing periodical quality tests of connections available on the mobile device of the callee.

9. Method according to any of previous claims wherein determining a probability of the callee to be reachable further comprising checking a list of numbers with a previously assigned 100% probability of the callee to be reachable.

10. Method according to claim 9 wherein the list of numbers with a previously assigned 100% probability of the callee to be reachable further comprises one or more numbers with an active voice mail service.

11. Method according to any one of previous claims further comprising receiving at least one parameter associated to callee's usage pattern based on callee's call detail records stored by callee's mobile operator and wherein determining a probability of the callee to be reachable is also based on said parameter associated to callee's usage pattern.

12. Method according to any one of previous claims, wherein two or more parameters are received, further comprising:
- assigning to each of the received parameters a type of parameter from a previously set list;
- assigning a level of relevance to each of the received parameters according to the type assigned on the previous step;
wherein, the step of determining a probability of the callee to be reachable further comprising weighting said two or more parameters according to the level of relevance assigned.

13. Method according to any one of the previous claims wherein the telecommunication network is a Next Generation Intelligent Network.

14. Network element for providing an early feedback about the establishment of a telecommunication service call between a caller and a callee, through a telecommunication network, configured for:
- receiving a telecommunication network information comprising at least one parameter associated to reachability of the callee;
- determining a probability of the callee to be reachable based on the at least one parameter;
- if the probability is higher than the threshold, providing the caller with a ringing notification.

15. Computer program product comprising computer program code adapted to perform the method according to any of the claims 1-13 when said program code is executed on a computer, a digital signal processor, a field-programmable gate array, an application-specific integrated circuit, a micro-processor, a micro-controller, or any other form of programmable hardware
